# EUROPEAN PATENT SPECIFICATION

(11) **EP 2 045 105 B1**
(45) Date of publication and mention of the grant of the patent: **20.07.2011**
(21) Application number: 08165780.1
(22) Date of filing: 02.10.2008
(51) Int. Cl.: B60C 15/00

(54) **PNEUMATIC TIRE**
PNEUMATISCHER REIFEN
PNEUMATIQUE

(30) Priority: 04.10.2007 US 977382 P
(43) Date of publication of application: 08.04.2009
(73) Proprietor: The Goodyear Tire & Rubber Company, Akron, OH 44316-0001 (US)
(72) Inventor: Bodeux, Jean-Bernard, B-6600, Bastogne (BE); Feller, Jean-Marie, B-6780, Messancy (BE); Scavuzzo, Richard William, Wadsworth, OH 44281 (US); Assaker, Dany, B-6700, Arlon (BE); Gerard, Denis, B-6700, Stockem (BE); Licht, Laurent, F-57330, Zoufftgen (FR); Winkin, Didier, B-6600, Bastogne (BE); Vilchez Marcuri, Felix Maximo, L-7735, Colmar-Berg (LU); Maegerle, Wolfgang Karl, D-63526, Erlensee (DE)
(74) Representative: Kutsch, Bernd

(56) References cited:
- EP-A- 1 800 909
- DE-A1- 3 617 880

## Description

### Field of the Invention

The present invention is directed to a pneumatic tire. More specifically, the present invention is directed to a pneumatic radial tire wherein the bead portion of the tire is designed for improved durability due to the configuration of the turn-up portion of the carcass reinforcing ply.

### Background of the Invention

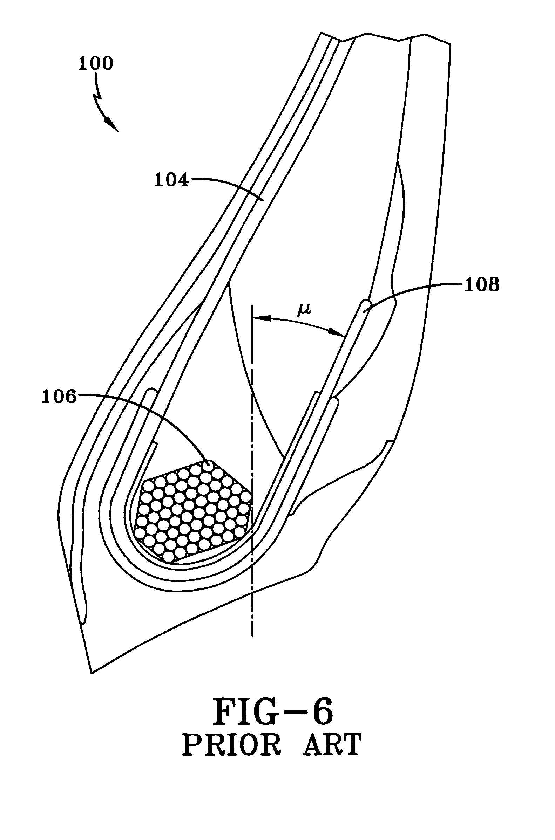

Bead area durability is one of the main concerns of the tire industry, more typically when the tire is overloaded or the temperatures and other conditions such as speed are extreme. A conventional tire bead portion 100 is illustrated in FIG. 6.

What is conventionally considered the main portion 104 of a carcass reinforcing ply extends radially inward toward the tire rim and is turned about an inextensible bead core 106 to form a carcass ply turnup 108. The carcass ply turnup 108 extends at a single angle p relative to a radial line tangent to the axially outermost point of the bead core 106 and parallel to the tire equatorial plane.

Due to the configuration and nature of the radial carcass, when a tire is expanded, the main portion of the carcass is put under tension, pulling the carcass main portion 104 radially upward and the carcass turnup 108 radially inward. After inflation and during operation of the tire, when the tire is under deflection, the carcass ply is subject to bending forces and the carcass main portion 104 moves radially inward while the carcass turnup 108 moves radially and axially outward. During both tension and deflection, the rubber surrounding the carcass main portion 104 and the carcass turnup 108, due to the adhesion relationship between the rubber and the reinforcing cords of the ply, also is forced to move and the rubber is stressed. The movement of the carcass ply and the surrounding rubber may result in cracking of the rubber in the tire bead portion, decreasing durability of the tire.

A tire according to the preamble of claim 1 is known from the document EP-A-1800909.

### Summary of the Invention

The invention relates to a tire according to claim 1.

Dependent claims refer to preferred embodiments of the invention.

### Brief Description of the Drawings

The invention will be described by way of example and with reference to the accompanying drawings in which:
FIG. 1 is a cross-sectional view of half of a pneumatic tire;
FIG. 2 is a close up of the bead portion that represents a prior art configuration;
FIGS. 3 - 4 are alternative bead portion constructions of the invention;
FIG. 5 is a cross-sectional view of an optional tread configuration; and
FIG. 6 is a prior art bead configuration.

### Definitions

"Axial" and "axially" mean the lines or directions that are parallel to the axis of rotation of the tire.

"Circumferential" means lines or directions extending along the perimeter of the surface of the annular tread perpendicular to the axial direction.

"Ply" means a cord-reinforced layer of elastomer-coated, radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between 65º and 90º with respect to the equatorial plane of the tire.

### Detailed Description of the Invention

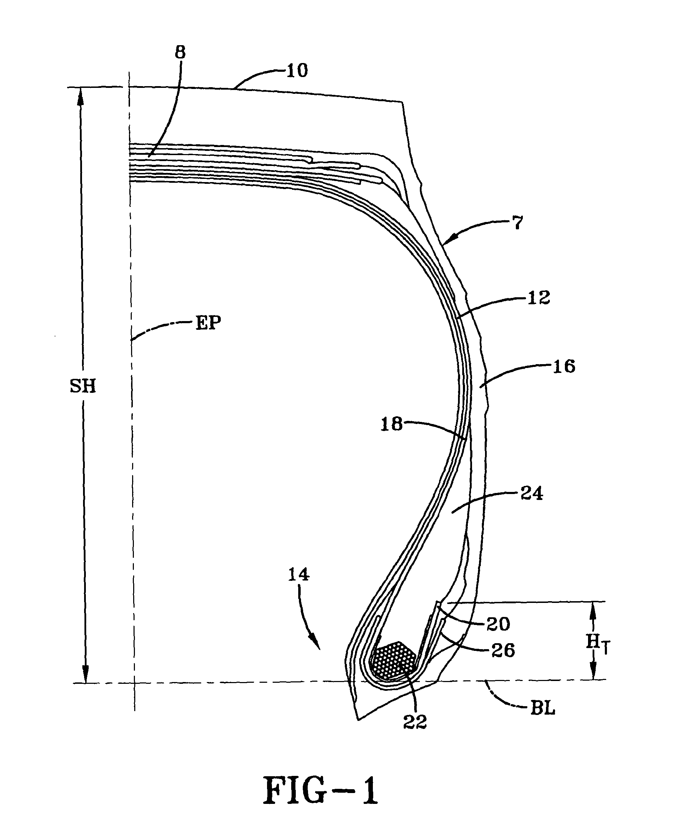

Fig. 1 shows a pneumatic tire which has a carcass 7, an optional a belt structure 8 radially outward of the carcass, and a tread 10 radially outward of the belt structure 8. The belt structure 8 may be any of the type conventionally used for a pneumatic tire, and generally will include at least two reinforcement plies of angled, inclined cords and may include a ply of zero degree cords. The actual belt structure of the tire is dictated by the intended end use of the tire. Similarly, the exact tread configuration is dictated by the intended end use of the tire.

The carcass may have only one carcass reinforcement ply 12 or two or more carcass reinforcing plys 12, a pair of opposing bead portions 14 and a pair of opposing sidewalls 16. Preferaby the tire has only one carcass ply 12. The ply 12 has a main portion 18 extending through the opposing sidewalls 16 and a carcass turnup 20 initiating in the bead portions 14. The carcass turnup 20 of the carcass reinforcing ply 12 extends from the main portion 18 of the carcass reinforcing ply 12 and is wrapped about a bead core 22 and a bead apex 24 in the bead portion 14. The carcass turnup 20 terminates at a distance H_{T} from the tire bead base line BL. The tire bead base line BL is an imaginary line, perpendicular to the equatorial plane EP of the tire, from the intersection of the radially extending outerside of the bead portion and the bead base of the tire.

Outward of the carcass ply 12 in the bead portion 14 is a cord reinforced ply, referred to as the chipper 26. The chipper 26 extends from axially inward of the bead core 22 to axially outward of the bead core 22, being turned up around the bead core 22 similar to the carcass ply 12. The axially outer end 26b of the chipper preferably terminates radially inward of the carcass ply end 20. The chipper 26 is optional and may be omitted from the tire construction so that the only reinforcing cord ply that wraps about the bead core 22 is the carcass ply 12.

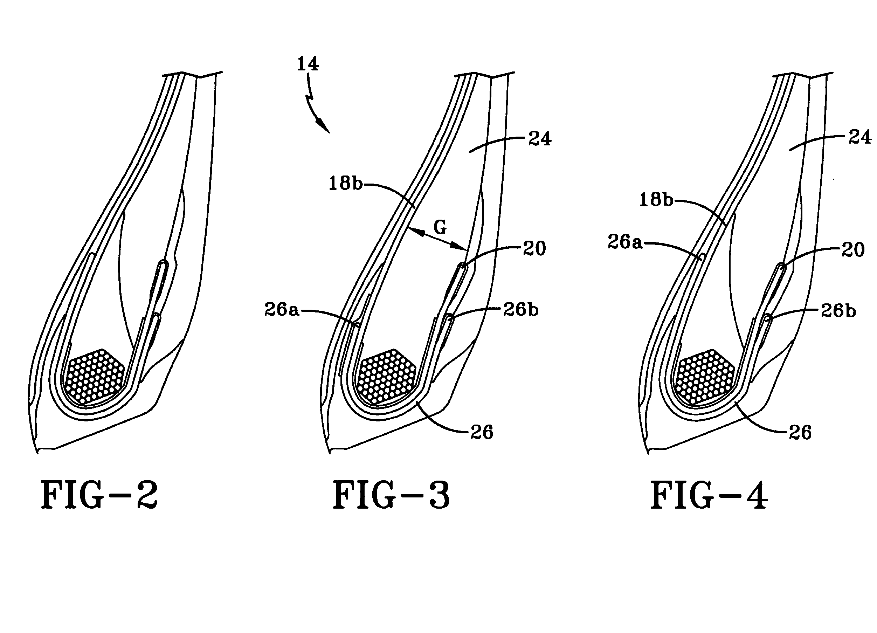

FIG. 2 illustrates a prior art bead configuration. Figure 3 represents a first embodiment of the invention and illustrates a robust bead configuration. First, the gauge G of the apex 24 is preferably increased relative to the prior art in Fig. 2 in order to lower shear stress cycles and temperature, preferably in the range of from 1-5 mm, more preferably 2-4 mm. Secondly, it is preferred that a single, comparably soft apex be utilized for improved durability. Optionally, the apex volume is decreased in the range of from 5-15% for improved durability. Preferably, the end of the ply turnup end 20 and the chipper end 26b is rotated away from the apex 24 in the range of 5 to 15 degrees, preferably 5-10 degrees such as 7 degrees. Preferably, the ply turnup 20 and chipper end 26b are oriented parallel or about parallel to the down ply portion 18b. The curvature of the ply turnup/chipper end may be curved in a parallel manner to down ply 18 as shown in Figure 4, or may be linear as shown in Fig 3. However, the ply turnup 20 and/or chipper 26 need not be exactly parallel, and the ply turnup 20 and/or chipper 26 may be rotated about 5 degrees axially outward from the parallel configuration.

Optionally, the inside chipper end 26a is located radially inward in the range of about 5 to 15 mm relative to the prior art tire, so that the inside chipper end 26a is located for instance 5 to 15 mm, preferably 8 to 12 mm, radially inward of the outside chipper end 26b. Optionally the inside chipper end 26a may be at about the same radial distance from the bead as the outer chipper end 26b or slighter radially outwards of the end 26b, as shown in Fig 4. Figure 4 also illustrates a dual compound apex which may also be utilized in Fig. 3 instead of a single apex compound.

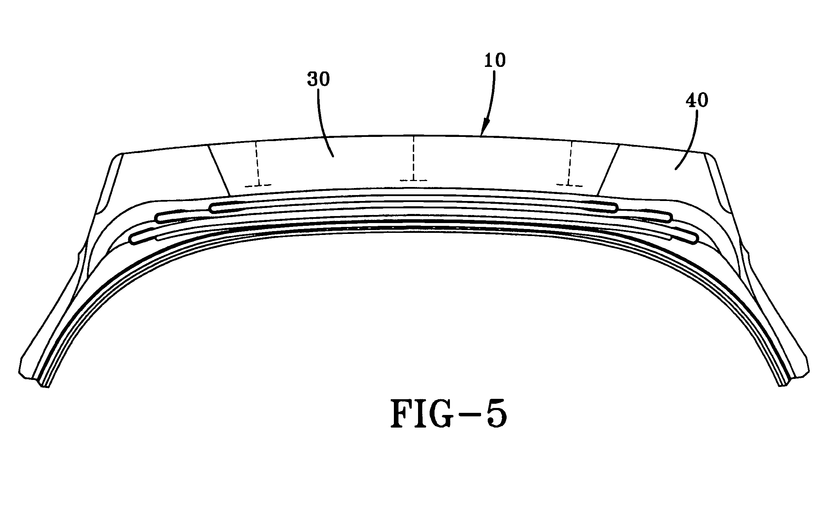

To further improve the durability of the tire, the tread 10 may be configured as shown in Figure 5. Figure 5 illustrates a tread divided into a center zone 30 and outer shoulder zones 40. The center zone is formed of a compound that has a lower running temperature under load than in the shoulder zones, while the outer shoulder zones 40 are selected for high durability.

The tire of the present invention has an improved life and improved bead durability. The teachings herein are applicable to a broad range of tires and may be useful in tire lines such as, but not limited to, passenger tires, radial medium truck tires, aircraft tires, and off-the-road tires. The teachings may also be useful in improving bead durability for run-flat tires of any type.

## Claims

1. A pneumatic tire comprising at least one carcass reinforcing ply (12) and a pair of opposing bead portions (14) each comprising a bead core (22) and an apex (24) wherein the at least one carcass reinforcing ply (12) has a down portion (18) extending radially inwardly axially inward of the apex (24) and the bead core (22) and a turn-up portion (20) extending radially outwardly axially outward of the apex (24) and the bead core (22), **characterized in that** the part of the turn-up portion (20) extending radially above the bead core (22) extends parallel to the down portion (18), or that the part of the turn-up portion (20) extending radially above the bead core (22) diverges from the down portion (18) with the distance between the part of the turn-up portion (20) extending radially above the bead core (22) and the down portion (18) increasing when moving in the radially outward direction.

2. The tire of claim 1 wherein the distance between the part of the turn-up portion (20) extending radially above the bead core (22) and the down portion (18) is constant or wherein the turn-up portion (20) has the same curvature as the down portion (18).

3. The tire of claim 1 wherein the part of the turn-up portion (20) extending radially above the bead core (22) is straight.

4. The tire of claim 1 or 3 wherein the distance between the part of the turn-up portion (20) extending radially above the bead core (22) and the down portion (18) continuously increases with the difference between the lowest distance and the highest distance being in a range of from 0.5 mm to 4 mm.

5. The tire of claim 4 wherein the difference between the lowest distance and the highest distance is in a range of from 0.5 mm to 2 mm, alternatively from 1 to 2 mm.

6. The tire of claim 4 wherein the difference between the lowest distance and the highest distance is in a range of from 1 mm to 3 mm.

7. The tire of at least one of the previous claims wherein the part of the turn-up portion (20) extending radially above the bead core (22) is rotated in a range of from 1 degrees to 8 degrees axially outward from the parallel configuration.

8. The tire of claim 7 wherein the part of the turn up portion (20) extending radially above the bead core (22) is rotated in a range of from 4 degrees to 6 degrees axially outward from the parallel configuration.

9. The tire of at least one of the previous claims further comprising a chipper (26) having an axially inner end (26a) and an axially outer end (26b) wherein the axially inner end (26a) is located radially inward of the radial outer end of turn-up portion (20) and/or wherein the axially inner end (26a) is located radially inward of the axially outer end (26b).

10. The tire of claim 9 wherein the axially inner end (26a) is located 5 to 15 mm radially inward of the radial outer end of the turn-up portion (20).

11. The tire of claim 9 or 10 wherein the axially inner end (26a) is located 2 to 15 mm, alternatively 3 to 10 mm, radially inward of the axially outer end (26b).

12. The tire of at least one of the previous claims further comprising a chipper (26) having an axially inner end (26a) and an axially outer end (26b) wherein the axially inner end (26a) is located radially about at the same height as the radially outer end of the turn-up portion (20) and wherein the axially outer end (26b) is located 2 to 15 mm, alternatively 3 to 10 mm, radially inward of the radially outer end of the turn-up portion (20).

13. The tire of at least one of the previous claims wherein the apex (24) is formed of one compound.

14. The tire of at least one of the previous claims further comprising a tread (10) having an inner zone (30) formed of a first rubber compound and outer shoulder zones (40) formed of a second rubber compound wherein the first rubber compound is different from the second rubber compound.

15. The tire of claim 14 wherein the first rubber compound has a lower running temperature under load than the second compound.

## Patentansprüche

1. Luftreifen, umfassend mindestens eine Karkassenverstärkungslage (12) und ein Paar einander gegenüberliegender Wulstbereiche (14), die jeder einen Wulstkern (22) und ein Kernprofil (24) umfassen, wobei die mindestens eine Karkassenverstärkungslage (12) einen nach unten gerichteten Teil (18) aufweist, der sich radial einwärts axial einwärts von dem Kernprofil (24) und dem Wulstkern (22) erstreckt, und einen Umschlagteil (20), der sich radial auswärts axial auswärts von dem Kernprofil (24) und dem Wulstkern (22) erstreckt, **dadurch gekennzeichnet, dass** der sich radial über dem Wulstkern (22) erstreckende Teil des Umschlagteils (20) sich parallel zu dem nach unten gerichteten Teil (18) erstreckt, oder dass derjenige Teil des Umschlagteils (20), der sich radial über dem Wulstkern (22) erstreckt, von dem nach unten gerichteten Teil (18) divergiert, wobei der Abstand zwischen dem sich radial über dem Wulstkern (22) erstreckenden Teil des Umschlagteils (20) und dem nach unten gerichteten Teil (18) bei Bewegung in der radial auswärts gerichteten Richtung zunimmt.

2. Reifen nach Anspruch 1, wobei der Abstand zwischen dem sich radial über dem Wulstkern (22) erstreckenden Teil des Umschlagteils (20) und dem nach unten gerichteten Teil (18) konstant ist oder wobei der Umschlagteil (20) die gleiche Krümmung wie der nach unten gerichtete Teil (18) aufweist.

3. Reifen nach Anspruch 1, wobei der sich radial über dem Wulstkern (22) erstreckende Teil des Umschlagteils (20) gerade ist.

4. Reifen nach Anspruch 1 oder 3, wobei der Abstand zwischen dem sich radial über dem Wulstkern (22) erstreckenden Teil des Umschlagteils (20) und dem nach unten gerichteten Teil (18) kontinuierlich zunimmt, wobei die Differenz zwischen dem geringsten Abstand und dem größten Abstand in einem Bereich von 0,5 mm bis 4 mm liegt.

5. Reifen nach Anspruch 4, wobei die Differenz zwischen dem geringsten Abstand und dem größten Abstand in einem Bereich von 0,5 mm bis 2 mm, alternativ 1 bis 2 mm, liegt.

6. Reifen nach Anspruch 4, wobei die Differenz zwischen dem geringsten Abstand und dem größten Abstand in einem Bereich von 1 mm bis 3 mm liegt.

7. Reifen nach mindestens einem der vorgenannten Ansprüche, wobei der sich radial über dem Wulstkern (22) erstreckende Teil des Umschlagteils (20) in einem Bereich von 1 Grad bis 8 Grad axial auswärts von der parallelen Konfiguration verdreht ist.

8. Reifen nach Anspruch 7, wobei der sich radial über dem Wulstkern (22) erstreckende Teil des Umschlagteils (20) in einem Bereich von 4 Grad bis 6 Grad axial auswärts von der parallelen Konfiguration verdreht ist.

9. Reifen nach mindestens einem der vorgenannten Ansprüche, weiter einen Wulstverstärker (26) mit einem axial inneren Ende (26a) und einem axial äußeren Ende (26b) umfassend, wobei das axial innere Ende (26a) sich radial einwärts von dem radial äußeren Ende des Umschlagteils (20) befindet und/oder wobei das axial innere Ende (26a) sich radial einwärts von dem axial äußeren Ende (26b) befindet.

10. Reifen nach Anspruch 9, wobei das axial innere Ende (26a) sich 5 bis 15 mm radial einwärts von dem radial äußeren Ende des Umschlagteils (20) befindet.

11. Reifen nach Anspruch 9 oder 10, wobei das axial innere Ende (26a) sich 2 bis 15 mm, alternativ 3 bis 10 mm, radial einwärts von dem axial äußeren Ende (26b) befindet.

12. Reifen nach mindestens einem der vorgenannten Ansprüche, weiter einen Wulstverstärker (26) mit einem axial inneren Ende (26a) und einem axial äußeren Ende (26b) umfassend, wobei das axial innere Ende (26a) sich radial etwa auf der gleichen Höhe wie das radial äußere Ende des Umschlagteils (20) befindet und wobei das axial äußere Ende (26b) sich 2 bis 15 mm, alternativ 3 bis 10 mm, radial einwärts von dem radial äußeren Ende des Umschlagteils (20) befindet.

13. Reifen nach mindestens einem der vorgenannten Ansprüche, wobei das Kernprofil (24) aus einer einzigen Mischung hergestellt ist.

14. Reifen nach mindestens einem der vorgenannten Ansprüche, weiter eine Lauffläche (10) umfassend, die eine aus einer ersten Kautschukmischung gebildete innere Zone (30) und aus einer zweiten Kautschukmischung gebildete äußere Schulterzonen (40) aufweist, wobei die erste Kautschukmischung verschieden von der zweiten Kautschukmischung ist.

15. Reifen nach Anspruch 14, wobei die erste Kautschukmischung eine niedrigere Lauftemperatur unter Last hat als die zweite Mischung.

## Revendications

1. Bandage pneumatique comprenant au moins une nappe de renforcement de carcasse (12) et une paire de portions de talons opposées (14) comprenant chacune une tringle de talon (22) et un bourrage sur tringle (24), ladite au moins une nappe de renforcement de carcasse (12) possédant une portion inférieure (18) qui s'étend en direction radiale vers l'intérieur, c'est-à-dire à l'intérieur du bourrage sur tringle (24) et de la tringle de talon (22) en direction axiale et une portion de retournement vers le haut (20) s'étendant en direction radiale vers l'extérieur, c'est-à-dire à l'extérieur du bourrage sur tringle (24) et de la tringle de talon (22) en direction radiale, **caractérisé en ce que** la partie de la portion de retournement vers le haut (20) qui s'étend en direction radiale au-dessus de la tringle de talon (22) s'étend parallèlement à la portion inférieure (18), ou bien **en ce que** la partie de la portion de retournement vers le haut (20) s'étendant en direction radiale au-dessus de la tringle de talon (22) s'écarte de la portion inférieure (18), la distance s'étendant entre la partie de la portion de retournement vers le haut (20) qui s'étend en direction radiale au-dessus de la tringle de talon (22) et la portion inférieure (18) augmentant de manière proportionnelle avec le déplacement dans la direction radiale vers l'extérieur.

2. Bandage pneumatique selon la revendication 1, dans lequel la distance s'étendant entre la partie de la portion de retournement vers le haut (20) qui s'étend en direction radiale au-dessus de la tringle de talon (22) et la portion inférieure (18) est constante, ou bien dans lequel la portion de retournement vers le haut (20) possède la même courbure que celle de la portion inférieure (18).

3. Bandage pneumatique selon la revendication 1, dans lequel la partie de la portion de retournement vers le haut (20) qui s'étend en direction radiale au-dessus de la tringle de talon (22) est droite.

4. Bandage pneumatique selon la revendication 1 ou 3, dans lequel la distance s'étendant entre la partie de la portion de retournement vers le haut (20) qui s'étend en direction radiale au-dessus de la tringle de talon (22) et la portion inférieure (18) augmente en continu, la différence entre la distance la plus basse et la distance la plus haute se situant dans la plage de 0,5 mm à 4 mm.

5. Bandage pneumatique selon la revendication 4, dans lequel la différence entre la distance la plus basse et la distance la plus haute se situe dans la plage de 0,5 mm à 2 mm, en variante de 1 à 2 mm.

6. Bandage pneumatique selon la revendication 4, dans lequel la différence entre la distance la plus basse et la distance la plus haute se situe dans la plage de 1 mm à 3 mm.

7. Bandage pneumatique selon l'une quelconque des revendications précédentes, dans lequel la partie de la portion de retournement vers le haut (20) qui s'étend en direction radiale au-dessus de la tringle de talon (22) effectue une rotation dans la plage de 1° à 8° en direction axiale à l'extérieur de la configuration parallèle.

8. Bandage pneumatique selon la revendication 7, dans lequel la partie de la portion de retournement vers le haut (20) qui s'étend en direction radiale au-dessus de la tringle de talon (22) effectue une rotation dans la plage de 4° à 6° en direction axiale à l'extérieur de la configuration parallèle.

9. Bandage pneumatique selon l'une quelconque des revendications précédentes, comprenant en outre un renfort d'appui (26) possédant une extrémité interne (26a) en direction axiale et une extrémité externe (26b) en direction axiale, l'extrémité interne (26a) en direction axiale venant se disposer à l'intérieur, en direction radiale, de l'extrémité externe radiale de la portion de retournement vers le haut (20) et/ou l'extrémité interne (26a) en direction axiale venant se disposer à l'intérieur, en direction radiale de l'extrémité externe (26b) en direction axiale.

10. Bandage pneumatique selon la revendication 9, dans lequel l'extrémité interne (26a) en direction axiale est située à une distance de 5 à 15 mm à l'intérieur en direction radiale de l'extrémité externe radiale de la portion de retournement vers le haut (20).

11. Bandage pneumatique selon la revendication 9 ou 10, dans lequel l'extrémité interne (26a) en direction axiale est située à une distance de 2 à 15 mm, en variante de 3 à 10 mm, à l'intérieur en direction radiale de l'extrémité externe radiale (26b).

12. Bandage pneumatique selon l'une quelconque des revendications précédentes, comprenant en outre un renfort d'appui (26) possédant une extrémité interne (26a) en direction axiale et une extrémité externe (26b) en direction axiale, l'extrémité interne (26a) en direction axiale venant se disposer à peu près à la même hauteur que l'extrémité externe en direction radiale de la portion de retournement vers le haut (20), et dans lequel l'extrémité externe (26b) en direction axiale à une distance de 2 à 15 mm, en variante de 3 à 10 mm, à l'intérieur en direction radiale de l'extrémité externe en direction radiale de la portion de retournement vers le haut (20).

13. Bandage pneumatique selon l'une quelconque des revendications précédentes, dans lequel le bourrage sur tringle (24) est constitué d'un seul composé.

14. Bandage pneumatique selon l'une quelconque des revendications précédentes, comprenant en outre une bande de roulement (10) possédant une zone interne (30) constituée d'un premier composé du caoutchouc et des zones d'épaulements externes (40) constituées d'un deuxième composé de caoutchouc, le premier composé de caoutchouc étant différent du deuxième composé de caoutchouc.

15. Bandage pneumatique selon la revendication 14, dans lequel le premier composé de caoutchouc possède une température de déplacement sous charge inférieure à celle du deuxième composé.
